# EUROPEAN PATENT APPLICATION

(11) **EP 4 776 171 A1**
(43) Date of publication of application: **15.07.2026**
(21) Application number: 25222946.3
(22) Date of filing: 12.12.2025
(51) Int. Cl.: G06F 30/13, G06Q 30/0283, G06Q 50/08, G06T 19/00, G06F 111/20

(54) **METHOD, COMPUTER PROGRAM AND SYSTEM FOR IMPROVED ARCHITECTURAL CAD**

(30) Priority: 10.01.2025 BE 202505020
(71) Applicant: Initia, 4020 Liège (BE)
(72) Inventor: VANNESPENNE, Christophe, 4877 Olne (BE); GERARD, Etienne, 4357 Donceel (BE); GERARD, Pascal, 4000 Liège (BE)
(74) Representative: Calysta NV

(57) **Abstract**

A method for designing an architectural project with the help of an architectural CAD program running on a computer, wherein the method comprises the step of drawing in the architectural CAD program a layout of the architectural project by providing wall elements and/or room elements on a two-dimensional plan, wherein the architectural CAD program is configured based on the drawn layout to calculate the bill of quantities of the architectural project.

## Description

### Technical Field

The present invention relates to a method, computer program and a system for architectural computer aided design (CAD).

### Prior art

Before constructing a new building, there are several steps required. First, an architect needs to generate detailed drawings in two dimensions (2D drawings) in collaboration with the client. This is normally realized with professional CAD software. This takes normally some weeks or even months. Optionally, the architect will generate three-dimensional views of the project which normally is done with a different software and requires therefore another delay of some weeks. Once the 2D drawings are finished, the architect or a technical architect will extract from the 2D drawings the dimensions in order to establish a bill of quantities, i.e. a list of different building material and work and their related quantities. For example, the volume of brick wall to build, the surface of tiles of type 1 to provide, the surface of parquet to provide, etc. This requires again some weeks. Only after that, one or more constructors are asked for the price of the constructions based on the bill of quantities which normally takes another month. So, before starting with constructing a building, these works can take several months and if the final price is too high for the client, it might be even repeated. This leads to a loss of resources in construction.

There are architectural software programs which allows to place 2D objects on a 2D plan and instantly generate a price of the project based on the sum of the prices of associated to each object, like US211/213480A1. However, such architectural software programs do normally not allow to generate complex bill of quantities as used in construction of buildings. Especially, when exchanging finishes, e.g. the type of wall finishing, it gets complicated to update the prices. Often, the finish and price of each wall object must be updated.

There are also architectural software programs which allow to place 2D objects on a 2D plan and instantly generate a 3D rendering of the project. The existing software programs are either highly simplified so that they cannot be used for the constructor or they require a high level of configuration of each object, like its surface rendering, etc. in order to establish the 3D view correctly.

EP2126755A1 or US211/213480A1 discloses the automatic generation of layout and design with the automatic generation of costs and 3D view of the project. However, it is not disclosed how this is realized.

A further problem for the client is when the construction is finally finished and he realizes in reality than the dimensions of the house which he might have approved in the 2D plans and the 3D renderings do not correspond to his imagination or lead to practical problems. This generates client frustrations and might require additional resources for changing the already constructed layout. US2019/259210A1 discloses for example to project the finalized 2D plan on a horizontal surface in real dimensions.

### Brief summary of the invention

It is the object of the invention to improve the planning process for buildings in order to avoid these problems.

According to the invention, this object is solved by a method, a computer program and a system according to the independent claims.

By providing the user instantly with the bill of quantities of the architectural project and the 3D view of the architectural project, a user can see right away during the planning phase the price or material needed and final 3D design of the project. This is made possible by a new data structure applied which uses the surface corner points of the rooms at the same time for generating the 3D view of the project and for computing quickly the surfaces of the walls, floors and ceiling and to calculate thus quickly their finish prices. The wall positions on the other side are defined via two inner wall points which allow to quickly compute the amount of wall material needed for all walls and thus to compute the total price of the wall material. Thus, this data structure solves finally the technical problem of arranging the data of CAD programs such that it allows to instantly compute the price and 3D view of the project. With this method, the planning process can be reduced from months to hours.

According to the invention, this object is solved by a method for designing an architectural project with the help of an architectural CAD program running on a computer, wherein the method comprises the step of drawing in the architectural CAD program a layout of the architectural project by providing wall elements and/or room elements on a two-dimensional plan, wherein the architectural CAD program is configured based on the drawn layout to calculate an estimated construction price of the architectural project and/or to generate a three-dimensional model of the architectural project.

The dependent claims refer to further advantageous embodiments.

In one embodiment, the frame element is one of a window, a door or a free opening.

In one embodiment, the architectural CAD program detects, when at least three wall elements drawn on the two-dimensional plan form a roomthe newly formed room, generates a room element corresponding to the detected room with the wall elements (W1, ..., W8) forming the detected room, and computes based on the wall elements (W1, ..., W8) of the generated room element, preferably based on their inner wall points, the surface corner points of the room, wherein the room element includes a floor finishing for the floor of the room and a ceiling finishing for the ceiling of the room.

In one embodiment, the architectural CAD program includes a wall finish price for each finishing of the wall elements, a wall material price for each wall material of the wall elements, a floor finishing price for each for each floor finishing and a ceiling finishing price for each ceiling finishing, wherein the at least one wall finish price, the at least one wall material price, the at least one floor finishing price and the at least one ceiling finishing price are amount dependent prices, wherein the bill of quantities computes the following quantities: a) for each wall material, the total price of the respective wall material based on the distances of all wall elements between the first inner wall point and the second inner wall point of the respective wall elements and based on the respective wall material price, preferably also based on the thickness of the respective wall elements and preferably based on the height of the wall elements or of the level; b) for each wall finishing, the total price of the respective wall finishing based on the distances between the surface corner points of the rooms of the wall elements related to the respective wall finishing and based on the respective wall finishing price, and preferably based on the height of the wall elements, room or level; c) for each floor finishing, the total price of the respective floor finishing based on the respective floor finishing price and based on the floor surface determined from the distances between the surface corner points of each room related to this floor finishing; and d) for each ceiling finishing, the total price of the respective ceiling finishing based on the respective ceiling finishing price and based on the ceiling surface determined from the distances between the surface corner points of each room related to this ceiling finishing.

In one embodiment, the size of the frames in the wall elements are used to correct total price of the respective wall material containing frames and the total price of the wall finishing containing frames.

In one embodiment, the surface corner points of the rooms are used to generate in the three-dimensional model the surfaces of the wall elements with their respective wall finishing, of the floors of the room elements with their respective floor finishing, and of the ceilings of the room elements with their respective ceiling finishing.

In one embodiment, the surfaces of the wall elements and of the ceilings are generated further based on the height of the level, of the room elements or of the wall elements.

In one embodiment, the drawn layout of a level is displayed to a horizontal surface such that the layout is shown on the horizontal surface at the dimensions of the real architectural project. This allows the user to see the final project in its real physical size (even before approval of the project). This avoids material waste by planning errors which lead after the construction to a remodelling of the building.

In one embodiment, the layout is displayed during the drawing of the layout. This increases the decision taking step significantly as the user sees immediately the effect in reality and can decide, if a certain room is large enough for his needs. Especially, when combined with an instant calculation of the price, the user has during the planning process all information to make quick decisions.

In one embodiment, the horizontal surface contains movable physical items placed on the at least some displayed wall elements of the layout.

In one embodiment, the horizontal surface contains movable wall items as physical items placed on at least some displayed wall elements of the layout.

In one embodiment, the horizontal surface contains movable furniture items as physical items placed in the displayed layout. Other embodiments according to the present invention are mentioned in the appended claims and the subsequent description of an embodiment of the invention.

### Brief description of the Drawings

Fig. 1 shows a 2D plan of a first drawing state of the project.
Fig. 2 shows a 2D plan of a second drawing state of the project.
Fig. 3 shows a 2D plan of a third drawing state of the project.
Fig. 4A shows an exemplary data structure for the objects of the CAD program at the first drawing state.
Fig. 4B shows an exemplary data structure for the objects of the CAD program at the third drawing state.
Fig. 5 shows an exemplary data structure of the objects.
Fig. 6 shows some exemplary distances between the inner wall points.
Fig. 7 shows some exemplary distances between surface corner points.
Fig. 8 explains the calculation of the horizontal wall surface based on the inner wall points.
Fig. 9 shows an exemplary system to draw an architectural project of the invention.

In the drawings, the same reference numbers have been allocated to the same or analogue element.

### Detailed description of an embodiment of the invention

Other characteristics and advantages of the present invention will be derived from the non-limitative following description, and by making reference to the drawings and the examples.

The invention comprises an architectural computer aided design program (short subsequently architectural CAD program or just CAD program).

The CAD program comprises a two-dimensional (2D) planning surface (abbreviated also as plan) for generating a layout by placing elements on the planning surface, moving them, changing eventually their size and or orientation.

The CAD is preferably programmed object-oriented, i.e. the programming paradigm that organizes code around objects, which represent real-world entities or concepts. These objects encapsulate data (attributes) and behavior (methods) into self-contained units, promoting modularity and reuse. OOP is based on four key principles: encapsulation (hiding internal details and exposing functionality through interfaces), inheritance (sharing and extending behaviors between classes), polymorphism (allowing objects to be treated as instances of their parent class), and abstraction (simplifying complex systems by focusing on essential features). This approach enhances code organization, scalability, and maintainability.

In the following, the data structure of an object shall be called object structure and an instance of such an object structure shall be called for simplicity object. Examples of such object structure can be a level object structure, a room object structure, a wall object structure, a frame object structure, a corner object structure.

An element in the CAD program shall refer to an element which can be generated or moved in the planning surface. Examples of such elements can be wall elements, frame elements. Each element corresponds normally to a respective object, i.e. an instance of the corresponding object structure. A wall element is normally stored in the program by a wall object.

The term "include specific data" shall mean either the specific data are directly stored or other data are stored which allow to calculate based on the other data the specific data and the CAD program contains functions to calculate the specific data. If an object (structure) includes the specific data, the specific data or the other data to calculate the specific data can be stored either in the object directly or in another object referenced by the object.

An amount dependent price is a price which is defined for a certain amount, preferably defined for a pre-defined surface area (normally per square meter) or a pre-defined volume (normally per cubic meters).

A point in the 2D plan is defined as a two-dimensional point, preferably in a cartesian coordinate system with an x-coordinate and an y-coordinate. The (cartesian) coordinate system reflects the dimensions of the real project so that the distance between 2 points in the 2D plan correspond to the real distance of the corresponding points in the real project building in the real world. The point could be stored in a point object.

A point in the 3D view is defined as a three-dimensional point, preferably in a cartesian coordinate system with an x-coordinate and an y-coordinate and a z-coordinate. The (cartesian) coordinate system reflects the dimensions of the real project so that the distance between 2 points in the 3D plan correspond to the real distance of the corresponding points in the real project building in the real world. The point could be stored in a 3D point object.

The invention comprises an architectural CAD program which is configured when running on a processor to perform the subsequent steps or method.

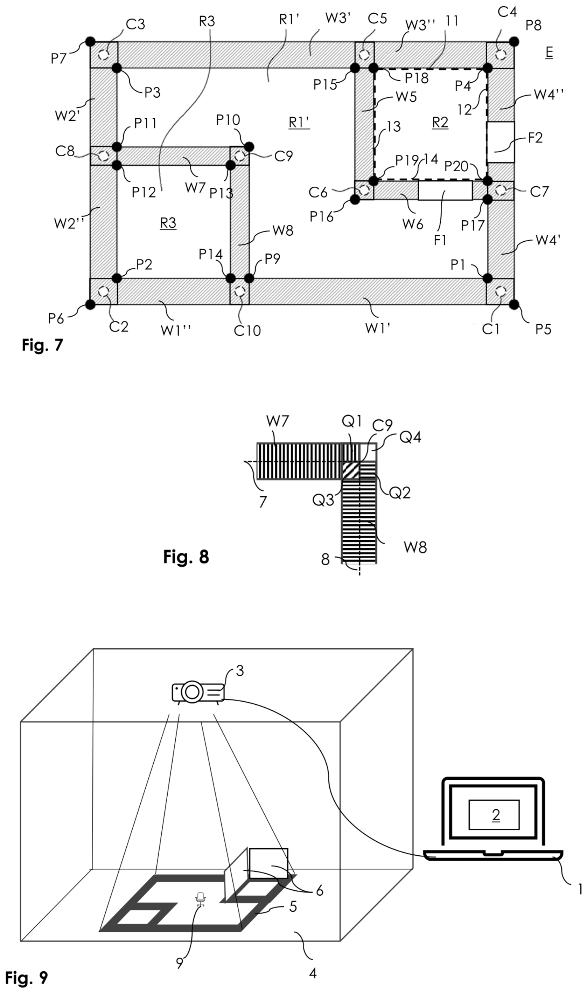

Fig. 9 shows a system to draw/develop an architectural project comprising a computer 1 on which runs the CAD program 2. The computer can be a personal computer (including al types like a workstation, a laptop, a tablet, a smartphone, etc). The computer can also be a client-server system. For example, the CAD software can run as a SaaS software on the server and is accessed over one or more client devices (like a workstation, a laptop, a tablet, a smartphone). The client and the server would then preferably be connected over the internet.

Optionally, the system comprises further a display means 3 configured to display the 2D layout 5, preferably a special project view (as explained later) of the architectural project (or a level of it) at the real dimensions of the project. The display means 3 is preferably a projector which projects the 2D layout or its special project view on a horizontal surface 4. However, the display means 3 can also be large flat screens arranged on the ground or under the ground or other display means which allow to display a layout.

Even if the display means 3 and the show surface 4 are very advantageous, the invention could be also realized without them.

The system comprises preferably further a show surface 4 (preferably of a show room) on which the 2D layout is displayed, preferably projected in the true/real dimensions of the architectural project. This is normally called a 1:1 view, i.e. a view which shows the plans in the true dimensions which the real building will have. This can be achieved by calibrating the projector once or for each project.

The system comprises preferably movable physical items 6, 9 which can be placed on the displayed/projected 2D plan on the show surface 4. The movable physical items comprise preferably one or more movable wall items which can be placed on the projected wall elements to imagine the true dimension in a room when standing in it. Further items could be furniture items 9 like chairs, tables, wardrobes, kitchen furniture, .... This allows a user to see its project at real size with real room boundaries (e.g. by the wall items) and eventually with furniture items. This reduces the likelihood of misplanning significantly and reduces thus resource waste caused by changing certain layout choices after having constructed the building. In addition, the layout at real size with the physical items helps the user to decide more quickly.

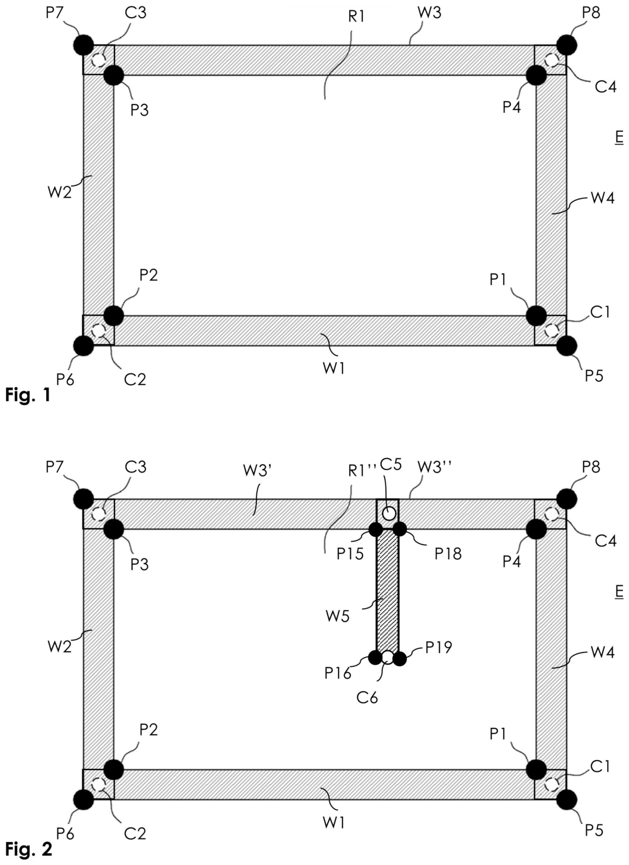

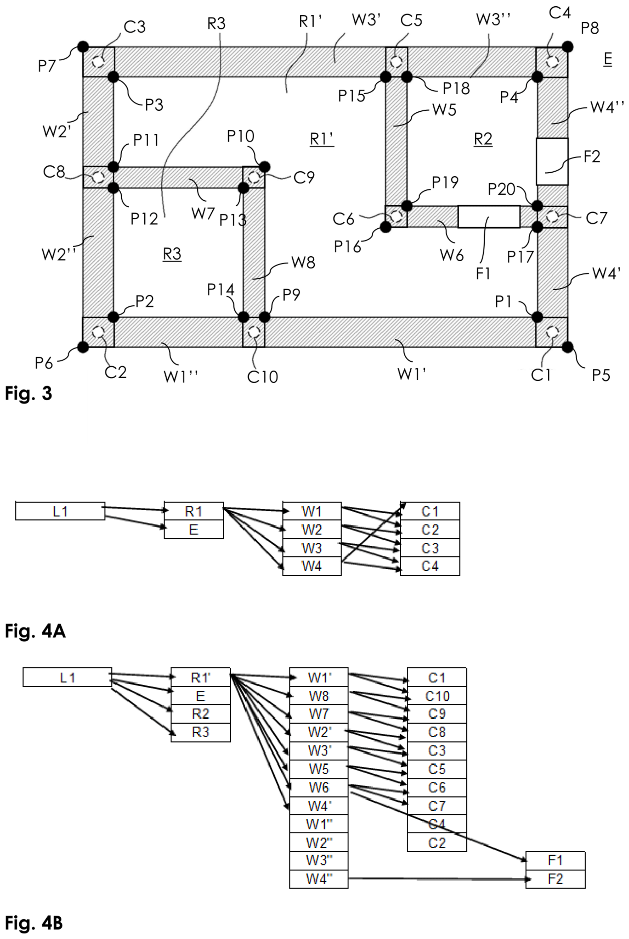

The program comprises a two-dimensional (2D) planning environment (plan) for drawing or generating a layout of an architectural project of a building, preferably a house. The 2D plan shows preferably a 2D view of the project, preferably a level of the building. The 2D plan allows a user to draw the project by drawing wall elements, room elements and other elements on the 2D plan. Fig. 1 shows such an example project layout on a 2D plan with four wall elements W1, W2, W3, W4 forming a room element R1. Preferably, the wall elements are drawn via a user input means like a mouse, a touch movement, etc by selecting the wall element function and placing and/or shaping it on the 2D plan. Preferably, the wall elements W1, W2, W3, W4 are drawn individually to form, when the (at least three, preferably four or more) wall elements W1, W2, W3, W4 form a closed space, a room element R1. The wall elements W1, W2, W3, W4, the room elements R1 and other elements will be explained in more detail below. The floor surface of the room R1 is then represented by the polygon or rectangle of the surface corner points P1, P2, P3, P4. When adding a new wall element W5 in Fig. 1, first the room R1 is changed to incorporate a free wall W5 as shown in Fig. 2. In this state of drawing, the changed room R1" is represented now by the wall elements W1, W2, W3', W5, W3'', W4. The floor surface of the room R1" is then represented by the polygon of the surface corner points P1, P2, P3, P15, P16, P19, P18, P4. By adding further wall element W5, a new room R2 is generated. By adding further wall elements W7 and W8, a further room R3 is generated and the room R1 or R1'' is reduced to the new room R1' as shown in Fig. 3.

The CAD program is preferably configured to compute the price of the project. The price of the project is calculated based on the layout of the 2D plan and predetermined prices (only). The quantities of the quantity dependent prices are automatically computed based on the 2D plan and the total prices are computed by multiplying the quantities with their respective quantity dependent price. The price of the project is preferably calculated instantly, i.e. it takes less than 5 sec, preferably less than 3 sec, preferably less than 1 sec. Preferably, each time a new element is drawn on the layout, the total price of the project is updated. However, it would also be possible to compute the price each time, when receiving a well-defined user input, e.g. clicking on a button. The CAD program is preferably configured to show and/or export a bill of quantities. A bill of quantities shows for different building materials/steps their respective price based on their material quantities. The bill of quantities and its calculation will be explained in more detail below.

The CAD program is preferably configured to show the project in a three-dimensional (3D) view or plan in which the 3D model of the project is shown. The 3D model of the project is computed based on the 2D layout drawn. The user can preferably change the view from the 2D plan to the 3D view. Alternatively or additionally, the user could show the 2D plan and the 3D view in parallel. The computation of the 3D model is preferably done in the background, when drawing the 2D plan so that when the user changes the view to the 3D view, the 3D model is ready and is directly displayed. However, it would also be possible to compute the 3D model from the 2D plan when the view is changed. The computation of the 3D model is shown in more detail below.

The CAD program is preferably further configured to output a special project view to a display means which is configured to display the 2D plan in the dimensions of the real building (1:1 view). The display means is preferably a projector projecting the 2D plan (of one level) on a floor. Preferably, the 2D plan is shown with a background colour which matches the background colour of the floor on which it is projected, preferably a black colour. Preferably, the background colour of the special project view can be selected. The elements like the wall elements, room elements, frame elements and evtl. other elements are shown in another colour, preferably a colour having a good contrast in the background colour. Thus, when selecting the background colour, preferably the colours of the elements are selected automatically as well. This functionality is described in more detail later.

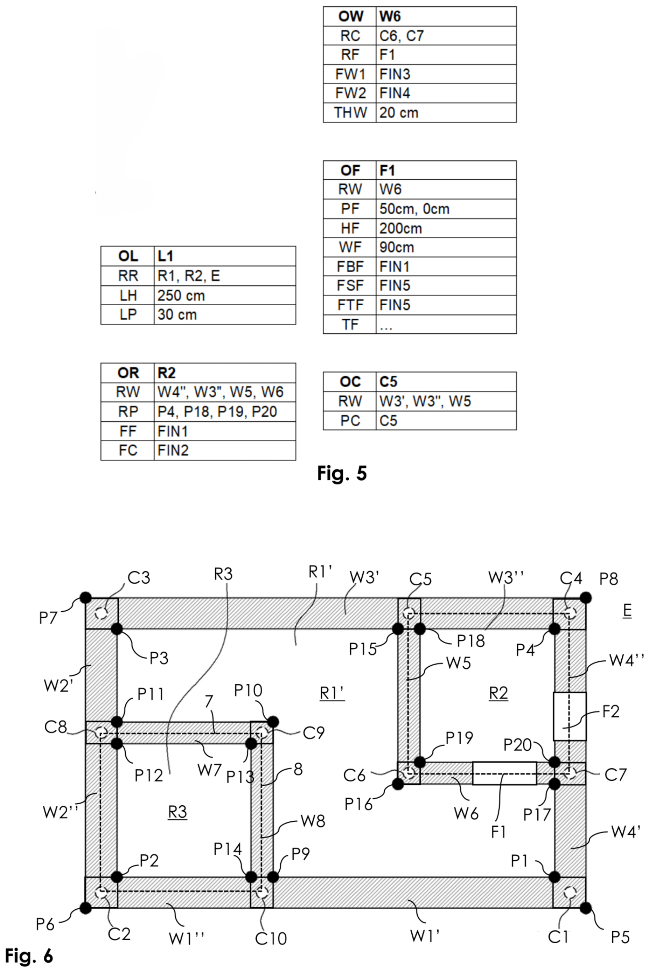

The 2D plan comprises a plurality of different types of elements which can be placed or drawn on the 2D plan like wall elements, room elements, frame elements and level elements. There might obviously be more elements like stair elements, like furniture elements (like toilet, a sink, a shower, a bath tube, a kitchen block, ...), or further elements. The CAD program is preferably structured with object-oriented code and most elements are stored as corresponding objects as will be explained in more detail below. Fig. 5 shows an example data structure of the level object structure OL, the room object structure OR, the wall object structure OW and the frame object structure OF. Even if the elements are explained for the case of objects in an object-oriented program, it is also possible to store these elements with different data structures.

Each wall element W1, ..., W8 represents a portion of wall of the project in one level. Each wall element W1, ..., W8 has preferably a well-defined form, preferably extends along a straight line. Each wall element W1, ..., W8 has a first side and a second side opposed to the first side. Each wall element W1, ..., W8 has a first end and a second end opposed to the first end. Each wall element W1, ..., W8 includes a first inner wall point and a second inner wall point defining the position (and orientation) of the wall element. The first inner wall point defines the position of the first end of the wall element and the second inner wall point defines the position of the second end of the wall. The wall element extends along the line (wall orientation line) between the first inner wall point and the second inner wall point. The wall orientation line is preferably parallel to the first side and the second side. The wall orientation line, the first inner wall point and/or the second inner wall point is/are preferably arranged in the middle between the first side and the second side of the wall element. If a first end of a wall element (e.g. W7) is connected with a first end of a further wall element (e.g. W8), the first inner wall point (here C9) is arranged at the intersection of the orientation lines (here 7 and 8) of the two wall elements (W7 and W8) as shown in Fig. 6. Consequently, the one of the inner wall points of two connected wall elements are the same. If an end of a wall element is not connected to another wall element, the respective inner wall point could be arranged at the real end of the wall element as there is no intersection with another wall element as shown in Fig. 2 for W5 before the wall element W6 is added in Fig. 3 to generate the new room R2. Preferably, the wall object includes the two inner wall points by referencing two corner objects. Each corner object includes one inner wall point (defining its position) and a reference to the wall objects connected over this corner object. Like that the wall object can reference to the corner objects at its ends to understand how many other wall objects are connected to the respective corner objects and thus to the wall object at its ends. Fig. 5 shows the wall element W6 which references the corners object C6 and C7. The corner object C5 is also exemplary shown with its reference to the three connected wall objects W3', W3" and W5 and the corner position CP, here the inner wall point C5. It is noted that the corner objects C1 to C10 and the inner wall points C1 to C10 are referenced in the figures with the same reference signs. Depending on the context it is however always, clear, if the inner wall points C1 to C10 is meant defining the position of the wall elements W1 to W8 or defining the positions of the corner objects C1 to C10 or if the corner objects C1 to C10 are meant. Even if this storage of the inner wall points in corner objects is very advantageous, other ways of storing the position of the wall elements or wall objects are possible.

The wall element/object OW includes preferably further a thickness of the wall element, i.e. a dimension in the direction perpendicular to the wall orientation line or a distance between the first side and the second side. The thickness is preferably stored as an attribute or parameter in the wall object. The thickness THW of the wall object W6 for example could be exemplary 20 cm.

The wall element/object OW includes preferably further a first finishing for the first side of the wall element (e.g. FIN3 for W6) and a second finishing for the second side (e.g. FIN4 for W6) of the wall element. Finishing refers to the material and/or treatment of the outer surface of a side of the wall element. The finishing could be a brick wall style (as for exterior of the house built with brick stones), a painted plastering, a plasterboard (as used often at the interior), a stoneware, a tile, concrete, or many more. The finishing for each side is preferably linked to a respective wall finishing price per surface area (normally per square meter) (in order to calculate the price for the finishing for the corresponding surface area of the wall element) and/or is preferably linked to a visualization pattern which can be used in the 3D view of the project to represent the finishing at the wall element in the 3D view.

The CAD program is preferably configured, when a second wall element (e.g. W5) is connected to a first wall element (e.g. W3) between the first and second inner wall point of the first wall element, to divide the first wall element (e.g. W3) into two wall elements, preferably in a third wall element (e.g. W3') from the first inner wall point of the first wall element to the first inner wall point of the second wall element (connection point) and in a fourth wall element (e.g. W3'') from the first inner wall point of the second wall element (connection point) to the second inner wall point of the first wall element. The second wall element instead extends from the first inner wall point of the second wall element (connection point or inner wall point of the third and fourth wall element) to the second inner wall point of the second wall element. The newly generated corner object would then be the inner wall point of the second wall element, the third wall element and the fourth wall object.

The wall element/object OW includes preferably also frame elements/objects, if the drawn wall element contains an opening through the wall element like windows, doors, free openings, etc. Preferably, the wall object (e.g. W6) includes a reference to any frame object (e.g. F1) contained in the wall.

A room element OR like R1, R1', R2, R3 represents a plurality of wall elements which form a closed space or a room. To form a room, it requires at least three straight wall elements. In a simplified version of the CAD program, the wall elements can only be arranged at a rectangular angle. In this case, a room can be formed only by four or more wall elements. The room element/object includes the wall elements/object forming the room or the closed space. For example, the room object R2 contains a reference RW to the wall objects W4", W3", W5, W6. The room element/object includes preferably further surface corner points of the room. The surface corner points are the intersection points of the sides of the wall elements pointing to the room. Thus, a room R2 with the wall elements/objects W4", W3", W5, W6 includes the surface corner points P4, P18, P19, P20. The surface corner points could be computed for example based on the inner wall points of the wall elements and the thicknesses of the wall elements. For example, for a surface corner point P20 constituted by an intersection of a first wall element W4'' and a second wall element W6, the surface corner point P20 can be computed by going half the thickness of the first wall element W4" in the direction of the orientation line of the second wall element W6 and half the thickness of the second wall element W6 in the direction of the orientation line of the first wall element W4". Preferably, when the room element is generated, once the surface corner points are computed, they are stored in the room element/object or in the wall or corner objects of the room element/object. Preferably, the surface corner points of the room element/object are stored in the room element directly. However, it would also be possible to store them in the wall elements/objects constituting the room element or referenced in the room object or in the corner objects. It would also be possible to compute the surface corner points each time when needed from the other information, e.g. the inner wall points of the wall elements and the thicknesses of the wall elements. As shown in Fig. 7, the surface corner points define the polygon of the surface of the floor or the ceiling of the room. For example, the surface corner points P4, P18, P19, P20 form the polygon (or rectangular) surface of the room R2.

Preferably, the room element/object includes further the floor finishing FF of the floor of the room, e.g. for L1 floor finishing FIN1. Preferably, the room element/object includes further the ceiling finishing FC of the ceiling of the room, e.g. for L1 ceiling finishing FIN2. The floor finishing FF and/or the ceiling finishing FC can be used to compute the price of the floor finishing FF or the ceiling finishing FC and/or to generate the 3D view of the floor and ceiling of the room with the correct visualization of its finishing. The floor finishing FF is therefore linked/referenced to an amount dependent price of the floor finishing (floor finish price) and/or to a visual pattern representing this floor finishing FF which is then displayed in the 3D view.

Preferably, the CAD program automatically detects, when a new wall element is added in a room and adapts the included wall elements (e.g. by adding the new one) and the surface corner points. When a new wall element closes a space to form a new room, preferably, the CAD program detects this and generates automatically a new room element/object (and adapts eventual changes in other rooms). The CAD program computes for the new room the surface corner points and includes them in the generated room element/object.

The exterior E of the house is preferably also represented as a room. Here the closed space is everything outside of the exterior walls. This allows to store the exterior finishings and exterior surface corner points of a project in the same structure as the room elements. So, the exterior space is treated as a room without a floor finishing and a ceiling finishing.

The frame element/object OF is an element which represents an opening through a wall element. The frame element can represent a window, door, or simply a free opening through the wall. The frame element can be placed in any wall element. The frame element/object includes preferably its position PF in the wall element/object. This position PF could be defined by two coordinates, representing a first/horizontal distance from a first origin point of the wall element and a second/vertical distance from the first origin point of the wall element. The origin point is preferably one of the two inner wall points, e.g. the first inner wall point. The position PF could define one of the corners of the frame object/element OF or a central point of it. The frame element/object OF includes preferably further the dimension of the frame, e.g. its height HF and its width. The dimensions are important to correct the prices of the wall material, the wall finishes as they would not cover the frame opening. In addition, the position PF and the dimensions HF, WF of the frame element OF is further important to visually represent the frame element OF in the 3D view in the wall. The frame element/object OF includes preferably further the type TF of the frame element, e.g. a door, window, or simply an empty opening through the wall. The type TF includes preferably a visualization for the frame object/element for its visualization in the 3D view. The frame element/object might include also a price for the frame element/object which might be a fixed price or a surface dependent price (so that the total price of this frame element could be computed based on the dimension of the frame element). The frame element could further comprise the type of finishings for the bottom surface FBF, for the lateral surfaces FSF and for the top surface FTF. For example, for F1 which is a door, the bottom surface would be the same finishing FIN1 as the floor as in room R1. The lateral and top surfaces have normally the same finishing as the wall surface. However, also other finishings can be defined.

The level element/object OL groups all elements/objects in this level. The level element/object OL includes preferably all room elements/objects of this level. A level element/object OL represents a level like cellar, ground floor, first floor, second floor, etc.. The project contains at least one level element/object, normally a ground floor. It is also possible that the project has a second level, normally arranged above or below the first level, i.e. a first floor or level or a underground floor or level. Naturally, the project can have more than two levels. Preferably, for each level element, a layout is drawn based on the wall elements in the 2D plan. The 2D plan preferably shows only one of the levels, the one on which the user is interested and/or is working. The 2D plan allows to switch from one level to the next or to generate new levels. However, it is also possible that the 2D plan shows two or more levels at the same time. The level object/element OL comprises preferably further the real height position LP of the floor (or another defined position) of the level element/object. E.g. LP could be defined from a defined height of the ground, so that LP is maybe 30 cm above this defined height of the ground. With LP, the actual position of the floor in the 3D view can be calculated and with the height of the level, the real height LH of the ceiling in the 3D view.

In a preferred embodiment, the wall objects, room objects, level objects and corner objects and frame objects are linked by references to each other. The level object L1 representing the layout shown in Fig. 1 is shown schematically in Fig. 4A. Not all references are shown in Fig. 4A and not all are described. Just some exemplary references will be described to show the concept. Obviously, the description holds for all other objects not described with their corresponding references. The level object L1 references two room objects, the room R1 and the exterior E. The room R1 constituted by the four walls W1 to W4 is represented by the room object R1 which references the four wall objects W1 to W4. Since also the exterior is constituted by the same four wall objects W1 to W4 (but by their second sides), also the room object E references the four wall objects. Each wall object references two corner objects like wall object W1 references the corner objects C1 and C2, the wall object W2, the corner objects C2 and C3 and so on. Fig. 4B shows now the representation of the evolved layout of the project shown in Fig. 3. The level object L1 references now four room objects, R1', E, R2, R3. The room R1 of Fig. 1 became a smaller room R1' by the insertion of the four wall objects W5 to W8. The adapted room object R1' references therefore the eight wall objects W1', W8, W7, W2', W3', W5, W6, W4'. While the room object R2 references the wall objects W3'', W4'', W5, W6, the room object R3 references the wall objects W1", W2", W7, W8, the room object E references therefore the eight wall objects W1', W1", W2'', W2', W3', W3'', W4'', W4'. Similar as described before, each wall object like W1' references to two corner objects like C1 and C10 representing the inner wall points of the wall object W1'. Each wall object having a frame object included like W6 and W4'' reference to their corresponding frame object F1 and F2, respectively.

Subsequently, it is explained how the bill of quantities is computed. The bill of quantities represents the total price for each type of material based on the quantities of those materials needed based on the layout of the project. The bill of quantities is needed to compute the total price of the project. Preferably, the CAD program is configured to show or export the bill of quantities with the sub-prices and quantities for each type of material. However, in a less preferred embodiment, it would also be possible to show only the total price of the type of materials calculated based on the bill of quantities. The bill of quantities comprises at least the following total prices for each wall material used, for each wall finishing used, for each floor finishing used, for each ceiling finishing used.

For each wall material, the total price of the respective wall material is computed. The total price for the respective wall material is computed based on the distances of all wall elements between the first inner wall point and the second inner wall point of the respective wall elements having this respective wall material and based on the respective wall material price. The total price for the respective wall material is computed preferably based on the distances of all wall elements between the first inner wall point and the second inner wall point of the respective wall elements having this respective wall material, the height of the wall elements (or of the room or the level, if they have all the same height) and based on the respective wall material price. Preferably, the distances between the inner wall points provide a kind of perimeter of the wall at its center. For example, in Fig. 1, the distance of the polygon of the four inner wall points (C1, C2, C3, C4) provide the distance of the four walls. Then, if this distance is multiplied with the height of the room or of the level (or in a more complex case each wall distance multiplied with its wall height), then the total wall surface is obtained. The wall material price could be provided as a volume dependent price as usually the case for concrete or for stone walls like brick wall. In this case, the wall element (and its price) is, preferably also based on the thickness of the respective wall elements. In this case, the total price of the respective wall material is then computed also based on the thickness of the wall. For example in Fig. 1, the surface obtained by multiplying the perimeter C1-C2-C3-C4 with the height would be further multiplied with the thickness of the wall (the order of the multiplication perimeter, height and thickness is obviously random) leading to the total volume of the wall material. However, the wall material price could also be given based on a specific wall thickness with a surface area dependent price (per square meter for example). For example for a 20cm thick brick wall, a fixed square meter price could be given. In this case, the surface obtained is then directly multiplied with the wall. However, it is preferred that the wall thickness is a dynamic parameter which can be changed in the drawings and the total wall material price can be obtained dynamically. Fig. 3 shows the case, where there are two types of wall elements, one type with a first thickness and a second type with a second thickness. The first wall type corresponds to the one in Fig. 1, but with more wall elements and thus corresponding inner wall points. Thus, the same wall material price for the wall polygon C1, C10, C2, C8, C3, C5, C4, C7 would be obtained based the respective polygon distance as for the distance of the wall polygon C1, C2, C3, C4 in Fig. 1. For the second type of wall with a thinner thickness, the total price could be computed based on the distance of the wall element W5, W6, W7, W8, i.e. based on the distances of their inner wall points C5-C6, C6-C7, C8-C9, C9-C10 as is well shown in Fig. 6. Thus, the total price of the wall material of the wall of the second type is computed based on these distances, multiplied with the height of the level, room or wall element. As explained above, if the wall material price is given for a specific wall type as a surface area dependent price, this obtained surface multiplied with the wall material price of this wall type would provide directly the total price of this wall material. Otherwise, if the wall material is given as a volume dependent price, the total price of the wall material of the wall of the second type is computed based on these distances, multiplied with the height of the level, room or wall element and multiplied with thickness of these wall elements W5, W6, W7, W8. If the height and/or thickness is the same for all wall elements, the height and/or thickness is multiplied once the distances of the wall elements W5, W6, W7, W8 are summed up to a total perimeter of the sum of the sub-perimeters C5-C6-C7 and C8-C9-C10. However, it is obviously also possible to multiply first each distance or sub-perimeter with its respective height and/or thickness. The total price of each wall material can be given preferably with sub-sums like one sub-total price of each wall material of a certain thickness, e.g. a total price for a brick wall of 30 cm (like the external wall in Fig. 3) and a total price of a brick wall of 20cm (like the internal walls W5, W6, W7, W8). The total price can be further sub-divided in areas of the building, e.g. the respective sub-total of each level of the building.

The amount of the respective wall material will be corrected based on the frame elements contained in the wall elements of this wall material. The frame elements define the surface or volume covered and thus allow to correct the total surface or volume of the wall material in the bill of quantities and thus the total price of the wall material in the bill of quantities. The correction can happen when anyway going through the wall elements by checking, if they contain a frame element. If this is the case, the surface or volume of the wall element could be corrected right away by the surface or volume of the frame element before summing this to the cumulative sum parameter. It would also be possible to sum first the surface of the volume of the wall element to the cumulative sum parameter and subtracting then the surface or volume of the frame element from the cumulative sum parameter (or vice versa) before going to the next wall element. However, it would also be possible to process first all wall elements without the correction of the frame elements and then go through all the frame elements and correcting the respective cumulative sum parameters.

Fig. 8 shows schematically, why the inner wall points are so advantageous for calculating the wall volume, or the horizontal wall surface (which must be multiplied with the height to obtain the wall volume). Since the inner wall point C9 is arranged at the intersection point of the wall orientation lines 7 and 8 of two connected wall elements W7 and W8, the multiplication of the distance between the two inner wall points with the thickness of the respective wall elements results in one rectangular surface with the length corresponding to the distance between the two inner wall points and a width corresponding to the thickness of the wall element for each wall element. The rectangular surface of the wall element W7 is illustrated as a vertically hatched rectangle and the rectangular surface of the wall element W8 is shown as a horizontally hatched rectangle. At the connection point C9, the two rectangles have a first rectangle surface Q3 which is covered by both rectangles, a rectangle Q1 covered only by the rectangle of the wall element W7 and a rectangle Q2 covered only by the rectangle of the wall element W8 and one rectangle of the wall elements W7 and W8 covered by none of those two rectangles of the wall elements W7 and W8. However, since the rectangle Q3 is covered twice and has the exact same size as Q4, the exact horizontal surface of the two wall elements and thus their correct volume can be calculated. When three wall elements would be connected at one inner wall point C9, additionally, for example in the direction of the orientation line 7, the rectangle Q4 would be filled by the rectangle surface of the third wall element and the rectangle Q2 would be covered twice, first by the wall element W8 and by the third wall element not shown. Thus, the horizontal wall surface could be corrected by the surface of Q2. Let's assume that a corner rectangle is represented by the square surface generated by the multiplication of the thicknesses of two perpendicular wall elements. For intersection of three or more wall elements, it would be possible to correct the horizontal wall surface or the wall material volume. In case of three wall intersections, the horizontal wall surface could be corrected by half the surface area of the corner rectangle. In case of four wall intersections, the horizontal wall surface could be corrected by the surface area of the corner rectangle. If a wall elements is at one end not connected with another wall element, the inner wall point is preferably arranged at the real end point of the wall on the wall orientation line so that the rectangle representing the horizontal wall surface extends correctly until the real end of the wall element.

If the object-oriented data structure is used in the CAD program, the CAD program goes preferably for each level object through the wall elements of this level and generates total price per wall material. Preferably, the CAD program determines for each wall element its length based on the distance between the two inner wall points, e.g. the distance between C5 and C6 for the wall object W5. Preferably, a cumulative sum is generated for each wall material and/or each wall type. The generated sum parameter for each wall type is added to the respective cumulative sum parameter to which it belongs. For example the wall elements W5, W6, W7, W8 could be made off a plasterboard and the wall elements W1 to W4 could be made of brick. By checking in each wall element to which wall material or type it belongs, the generated parameter could be summed to the respective cumulative sum parameter of the respective wall material. The parameter could be a distance, a surface or a volume or even a price of the wall element. For example, the distance of the walls W5 to W8 could be summed up and then multiplied by its height and thickness to get the volume of the wall. This can then multiplied by the wall material price per volume to get the total price of W5 to W8. However, it is also possible to calculate for each wall element W5 to W8 its wall surface by multiplying each wall distance by its height and summing up this wall surface for all walls of the same thickness. This could have the advantage that the surface of the frames included in the wall could be removed for each wall element from the cumulative sum parameter as will be explained below. Similar, it would also possible to multiply the distances of each wall element by its thickness and sum up a kind of horizontal surface of the wall elements (only if thickness of the wall is purely calculated on the volume price), or to multiply the distances with height and thickness and sum up the volumes of the wall elements. As mentioned, it would also be possible to sum up already the wall element prices, but this is less preferred as it is preferred to show on the bill of quantities the amount (surface or volume) of the wall elements and the final price. The thickness THW is preferably included in the wall object structure OW. The frame object included in a wall object can preferably be obtained by the reference of the wall object to the frame object, e.g. the wall object W6 referencing to the frame object F1, e.g. a door. If the correction of the wall amount by the frame objects is treated afterwards, the frame objects can be gone through one by one to correct at the end the final amounts of the cumulative sum parameters for each wall material. The height LH is preferably stored in the level object. The wall objects related to a level object, e.g. in Fig. 5 L1, can access the height LH of the level L1.

For each wall finishing RP, the total price of the respective wall finishing is based on the distances between the surface corner points of the rooms of the wall elements related to the respective wall finishing and based on the respective wall finishing price and preferably based on the height of the wall elements, room or level. In order to get the correct wall surfaces for calculating the price for the finishing of the wall surfaces, the wall surfaces are calculated based on the surface corner points. The distance between the surface corner points provide the perimeter of the room and/or the length of the surface of each wall element as shown in Fig. 7 for room R2. The distance 11 between the surface corner points P18 and P4 represents the length of the surface of the wall element W3'' toward the room R2. Thus, the distance 11 multiplied by the height of the wall element W3'' provides the surface area of the wall element W3'' for the wall finishing FW1/2. By doing this for each wall element (and for both sides of the wall element), the total surface area of the wall elements for each type of wall finishing can be computed, preferably by summing up the surface area of all wall surfaces with the same wall finishing of all wall elements to yield the total surface area for each type of wall finishing. By multiplying the total surface area of each type with the surface dependent price of the respective wall finishing, the total price for each type of wall finishing can be computed.

Similar as explained above, the wall surface areas are preferably corrected by the frame objects/elements contained in the wall elements. For example, the surface area of the wall element W6 is corrected, preferably subtracted by the surface area of the frame element F1 in the wall element W6 which can be obtained by the dimensions HF, WF of the frame element. If the dimensions are height HF and width WF, the surface area of the frame element could be obtained by multiplying HF and WF. Optionally, the lateral, top and/or bottom surfaces of the frame having the same finishing as the wall element can be further added to the area of the wall element with the respective finishing.

For each floor finishing, the total price of the respective floor finishing is based on the respective floor finishing price and based on the floor surface determined from the distances between the surface corner points of each room related to this floor finishing. As shown in Fig. 7, the surface of the floor of the room R2 is defined by the four surface corner points P18, P4, P19, P20. The surface area of the floor of R2 could be calculated by the distance between the surface corner points P18 and P4 or P19 and P20 multiplied by the distance of the surface corner points P4 and P20 or P18 and P19. In order to have a method which works for any room forms, e.g. also for room form R1', the surface area included in the polygon (e.g. P3-P15-P16-P17-P1-P9-P10-P11-P3) defined by the surface corner points could be integrated to obtain the surface area included. The surface area of the room element/object(s) with the same floor finishing FIN1 are multiplied with the area dependent price of the floor finishing in order to obtain the total price of this floor finishing.

The surface area of a floor finishing could be corrected by frame objects arranged on the bottom like doors and having the same floor finishing as the room element/object. In this case, the dimension of the floor surface area of the frame object/element can be added to the total surface area of a floor finishing. The surface area of the frame on the floor could be obtained by multiplying the thickness of the wall element with the width of the frame element.

For each ceiling finishing, the total price of the respective ceiling finishing is based on the respective ceiling finishing price and based on the ceiling surface determined from the distances between the surface corner points of each room related to this ceiling finishing. As shown in Fig. 7, the surface of the ceiling of the room R2 is defined by the four surface corner points P18, P4, P19, P20. The surface area of the ceiling of R2 could be calculated by the distance between the surface corner points P18 and P4 or P19 and P20 multiplied by the distance of the surface corner points P4 and P20 or P18 and P19. In order to have a method which works for any room forms, e.g. also for room form R1', the surface area included in the polygon (e.g. P3-P15-P16-P17-P1-P9-P10-P11-P3) defined by the surface corner points could be integrated to obtain the surface area included. The surface area of the room element/object(s) with the same ceiling finishing FIN1 are multiplied with the area dependent price of the ceiling finishing in order to obtain the total price of this ceiling finishing.

The bill of quantities and/or the total price preferably contains the prices of further objects/elements in the layout like the prices of the frame objects like windows, doors, etc. These can be fixed prices, if they have fixed dimensions. If the dimensions of the frames are variable like for windows, the prices can be dependent on the dimensions of the windows. Other prices could be the price for stair objects, furniture objects, etc. The bill of quantities could comprise further prices like the prices for hydraulic installations, for heating installations, for AC installations, for electricity installations. These could be fixed prices.

The 3D view of the project or the 3D model (of each level) is preferably computed based on the surface corner points of the rooms of the 2D plane and based on the wall finishings related to the wall elements (of this level) and preferably based on floor finishings of the room elements (of this level), and preferably based on the ceiling finishings of the room elements. If all the surface corner points of one level of the 2D view (which are 2D points) are converted in two sets of 3D points with the same x,y coordinate and once with the z-coordinate of the height LP of the floor (which could be retrieved from the level object/element OL) and once with the z-coordinate of the height of the ceiling LP+LH (which could be retrieved from the level object/element OL), a full grid of 3D points representing the level OL of this project in the 3D view is generated. Thus, the same surface corner points used for calculating all the finishing prices are used as well for generating the 3D view. This reduces the computation power for the generation of 3D view and for calculating the prices significantly. Thus, two sets of 3D points generated from the surface corner points of the 2D plan constitute a mesh in which only the mesh surfaces must be filled with the corresponding visualizations of the finishings stored in the wall elements and the room elements.

Preferably, each time a new element/object is added in the 2D view, the 3D model for the 3D view is updated (even if maybe not shown). This guarantees that the display of the 3D model is really fast. For example, when a new wall element W5 is added in Fig. 2, the CAD program generates in the 3D view additionally the surface renderings of the first side of the wall element W5 and of the second side of the wall element W5 based on the finishings stored in the wall element W5 and based on the newly generated points P15, P16, P18, P19. However, it could also be possible to update the 3D model only when the 3D view shall be presented. It is also possible to generate the 3D view each time, the 3D view is requested.

It should be understood that the present invention is not limited to the described embodiments and that variations can be applied without going outside of the scope of the claims.

## Claims

1. Method for designing an architectural project with the help of an architectural CAD program (2) running on a computer (1), wherein the method comprises the step of drawing in the architectural CAD program (2) a layout of the architectural project by providing wall elements (W1, ..., W8) and/or room elements (R1, R1', R1'', R2, R3) on a two-dimensional plan, wherein the architectural CAD program (2) is configured based on the drawn layout to compute a bill of quantities of the architectural project and to generate a three-dimensional model of the architectural project,
wherein each wall element (W1, ..., W8) has a first side and a second side, wherein each wall element (W1, ..., W8) includes a first inner wall point, a second inner wall point, a thickness, a first finishing for the first side of the wall element (W1, ..., W8) and a second finishing for the second side of the wall element (W1, ..., W8), wherein the first and second inner wall point are arranged in the middle between the first side and the second side of the wall element,
wherein frame elements (F1, F2) can be added in the wall elements (W1, ..., W8) on the two-dimensional plan of the architectural CAD program representing an opening through the wall element (W1, ..., W8), wherein the frame element includes its position in the wall element (W1, ..., W8) and its dimensions,
wherein each room element (R1, R1', R1", R2, R3) includes the wall elements (W1, ..., W8) forming the room element (R1, R1', R1", R2, R3), surface corner points of the room element (R1, R1', R1", R2, R3) representing the corners of the room, wherein some/most room elements (R1, R1', R1", R2, R3) include a floor finishing for the floor of the room element and a ceiling finishing for the ceiling of the room element,
wherein the surface corner points of the room elements (R1, R1', R1'', R2, R3) are used to generate in the three-dimensional model the surfaces of the wall elements (W1, ..., W8) with their respective wall finishing, of the floors of the room elements with their respective floor finishing, and of the ceilings of the room elements with their respective ceiling finishing, wherein the bill of quantities computes the following quantities:
for each wall material, an amount of the respective wall material based on the distances of all wall elements (W1, ..., W8) between the first inner wall point and the second inner wall point of the respective wall elements (W1, ..., W8), wherein the size of the frames in the wall elements (W1, ..., W8) are used to correct the amount of the respective wall material containing frames;
for each wall finishing, a surface of the respective wall finishing based on the distances between the surface corner points of the rooms of the wall elements (W1, ..., W8) related to the respective wall finishing, wherein the size of the frames in the wall elements (W1, ..., W8) are used to correct the surface of the respective wall finishing containing frames;
for each floor finishing, a surface of the respective floor finishing determined from the distances between the surface corner points of each room element (R1, R1', R1'', R2, R3) related to this floor finishing; and
for each ceiling finishing, a surface of the respective ceiling finishing determined from the distances between the surface corner points of each room element (R1, R1', R1'', R2, R3) related to this ceiling finishing.

2. Method according to claim 1, wherein the architectural CAD program detects, when at least three wall elements (W1, ..., W8) drawn on the two-dimensional plan form a room, the newly formed room, generates a room element corresponding to the detected room with the wall elements (W1, ..., W8) forming the detected room, and computes based on the wall elements (W1, ..., W8) of the generated room element, preferably based on their inner wall points, the surface corner points of the room, wherein the room element includes a floor finishing for the floor of the room and a ceiling finishing for the ceiling of the room.

3. Method according to claim 1 or 2, wherein the surfaces of the wall elements (W1, ..., W8) are generated further based on the height of the level, of the room elements or of the wall elements (W1, ..., W8).

4. Method according to one of the claims 1 to 3, wherein the wall elements are stored as wall objects, wherein the room elements are stored as room objects, wherein each room object references the wall objects constituting the room object.

5. Method according to claim 4, wherein each of the first and second inner wall point are included in a respective corner object referenced by the wall element, wherein each corner object contains a reference to each wall object connected at the inner wall point included in the corner object.

6. Method according to one of the claims 1 to 5, wherein the drawn layout is displayed to a horizontal surface (4) surface such that the layout is shown on the horizontal surface (4) at the dimensions of the real architectural project.

7. Method according to claim 6, wherein the layout is projected during the drawing of the layout.

8. Method according to one of the claims 6 to 7, wherein the horizontal surface (4) contains movable physical items (6) in order to provide the 2D layout displayed a third dimension.

9. Method according to one of the claims 6 to 8, wherein the horizontal surface (4) contains movable wall items (6) placed on at least some wall elements (W1, ..., W8) of the displayed layout (5).

10. Method according to one of the claims 6 to 9, wherein the layout (5) is displayed with a projector on the horizontal surface (4).

11. Method according to one of the claims 1 to 10, wherein the architectural CAD program is configured to access a wall finish price for each finishing of the wall elements (W1, ..., W8), a wall material price for each wall material of the wall elements (W1, ..., W8), a floor finishing price for each for each floor finishing and a ceiling finishing price for each ceiling finishing, wherein the at least one wall finish price, the at least one wall material price, the at least one floor finishing price and the at least one ceiling finishing price are amount dependent prices, wherein the bill of quantities computes the following prices:
for each wall material, a total price of the respective wall material based on the amount of the respective wall material and based on the respective wall material price;
for each wall finishing, a total price of the respective wall finishing based on the amount of the respective wall finishing and based on the respective wall finishing price;
for each floor finishing, the total price of the respective floor finishing based on the respective floor finishing price and based on the surface of the respective floor finishing; and
for each ceiling finishing, the total price of the respective ceiling finishing based on the respective ceiling finishing price and based on the ceiling surface of the respective ceiling finishing.

12. Computer program configured, when executed on a computer (1), to execute the steps of the method according to one of claims 1 to 11.

13. System comprising a computer with a computer program according to claim 13.

14. System according to claim 13, comprising further a display means (3) configured to display the layout (5) at the dimensions of the real architectural project on a horizontal surface.

15. System according to claim 14 comprising further the horizontal surface and movable physical items (6, 9) placed in the region of the displayed layout (5) on the horizontal surface (4).
